# EUROPEAN PATENT APPLICATION

(11) **EP 2 309 064 A2**
(43) Date of publication of application: **13.04.2011**
(21) Application number: 10175929.8
(22) Date of filing: 09.09.2010
(51) Int. Cl.: E03B 1/04, E03D 5/00

(54) **System and method for reusing water from a sink in a toilet**

(30) Priority: 06.10.2009 ES 200930802
(71) Applicant: Roca Sanitario, S. A., 08029 Barcelona (ES)
(72) Inventor: Munar Saura, Miguel Angel, 08029, Barcelona (ES)
(74) Representative: Ponti Sales, Adelaida

(57) **Abstract**

The system for reusing water from a sink (1) in a toilet (2) comprises a tank (3) provided with:
- two water intakes: a first intake of water from the mains and a second intake of water from the faucet of said sink (1); and a water exit to the bowl of said toilet (2);

and it is **characterized in that** said tank (3) comprises an upper tank (3a) and a lower tank (3b) connected to each other by a hole (7), said first and second intakes providing water to said upper tank (3a), so that water passes from said upper tank (3a) to said lower tank (3b) when the water present inside said lower tank (3b) is between a residual level and a first predetermined level.

The system guarantees that the water level inside the tanks is always suitable for using the toilet, independently if the reuse of water from the sink is used or not.

## Description

The present invention refers to a system for reusing water from a sink in a toilet, said sink being integrated with the tank of the toilet.

According to a second aspect, the present invention also relates to a method for reusing water from a sink in a toilet.

### BACKGROUND OF THE INVENTION

The application of sustainability principles in the management and optimization of water resources is an obligation and a need for all the productive sectors. In this sense, the development of efficient mechanisms, which permit to reduce water consumption to balance the imminent reduction of water resources, and also sustainable sanitary systems, constitute priority objectives in the sanitary sector.

The sanitary systems commonly used for treating residual water (drains and sewage treatment plants) do not take into account the nature of the water. However, not all the generated waters have the same quality. Generally, it is distinguished between gray waters and black waters.

The gray waters are specifically wash water from lavatories, sinks, showers, kitchen, etc. None of these sources usually sweeps organisms in the water, and their organic content is quickly discomposed.

The black waters, on the other hand, come mainly from toilets and contain high quantities of organic material, nitrogen and cellulose.

The separation of black waters from domestic residual waters is considered a very important step to a sustainable approach for using water. Furthermore, the gray waters appropriately used constitute a source with a high value, and their reuse supposes to increase their life cycle, adding value to their use.

The reuse of water generated at home corresponds to a new way of thinking about water, obtaining a water source in place of residual water.

The reuse of water means a saving of potable water, a decrease of the flow of septic tanks or treatment plants, a decrease of the charge of residual water, a lower use of energy and chemical by pumping and treatment, a very high purification, a solution for those places where any other kind of treatment cannot be used, the possibility of sowing plants where there is no other king of water, and the recovery of nutrients.

This need of adopting measures for rationalizing the consumption and the reuse of water is also apparent in the regulations related with the construction.

In the currently in force regulations reference is made e.g. to the use of gray and rainwater in the buildings.

There are currently some reuse systems of gray waters for houses, neighbor communities, sport installations, etc. The installations comprise independent pipes for collecting water from showers, sinks, etc., and conducting it to tanks, normally placed in basements or attics, where a depuration treatment is carried out. After the depuration, the water can be reused to feed the toilet tanks, for watering gardens or for washing. The gray water reusing systems currently known can obtain a saving of potable water from 30% to 50%, and this savings can reach up to 20,000 liters for person and year.

However, the water reusing systems currently known cannot be used in any place, because it is necessary enough space to develop the water treatment process and having the suitable climatic conditions. Furthermore, these known systems need usually electric energy for its operation.

Gray water reusing systems for its later use in toilet tanks are disclosed e.g. in FR2920795, WO2007090039, JP2006291496, US6425148, JP2001295344 and EP0894904.

### SUMMARY OF THE INVENTION

With the reusing system of the present invention said drawbacks can be solved, presenting other advantages that will be described.

According to first aspect, the system for reusing in a toilet water from a sink of the present invention comprises a tank provided with:
- two water intakes: a first intake of water from the mains and a second intake of water from the faucet of said sink; and
- a water exit to the bowl of said toilet;
   and it is **characterized in that** said tank comprises an upper tank and a lower tank connected to each other by a hole, said first and second intakes providing water to said upper tank, so that water passes from said upper tank to said lower tank when the water present inside said lower tank is between a residual level and a first predetermined level.

Advantageously, said upper tank comprises a drain, through which the water exists to a waste pipe when the water present inside said upper tank is higher than said first preset level.

Preferably, said second water intake comprises a deviation element, which in a first position deviates the water to said upper tank and in a second position deviates the water to said drain.

Said deviation element comprises preferably a particle filter, to prevent the passage of particles from the sink to the tank.

The reusing system can also comprise disinfecting means of the water inside the upper tank, which according to a preferred embodiment, said disinfection means comprises a disinfectant housed inside a container, said container comprising a feeding plate provided at an end of a swinging arm, the other end of said swinging arm being provided with a buoy, so that the position of the buoy determines the position of said feeding plate, the disinfectant being fed to the water when said water level inside the tank is higher than a preset level.

According to a second aspect, the present invention refers to a method for reusing in a toilet water from a sink for reusing it with the previous system, which is **characterized in that** it comprises the steps of:
a) filling said upper tank with water from a first intake, the water passing from the upper tank to the lower tank until the water reaches a second preset level;
b) discharging the water from said lower tank when a discharge push-button of the toilet is pushed;
c) repeating step a) if the level is lower than said second preset level;
d) filling said upper tank with water from a second intake until the water reaches a first preset level or a lower level;
e) mixing the water from the second intake with the water present inside the upper and lower tanks;
f) repeating step b); and
g) repeating step c).

According to a preferred embodiment, said first level is 10 liters of useful volume of water and said second level is of 6 liters of useful volume of water.

Preferably, step d) comprises a filtering step of said water from said second intake and/or a disinfection step when the water lever is higher than said second present level.

With the reusing system and method of the present invention the following advantages are obtained:
- it is compact and easy to install and use, in contrast with the currently known systems, which require great installations and spaces;
- it permits to select if the water from the sink is used in a very simple way, just pushing the deviation element;
- it guarantees that the water level inside the tanks is always suitable for using the toilet, independently if the reuse of water from the sink is used or not;
- in the case of a excess of reused water, the system itself removes automatically the remain water with no intervention of the user;
- it is obtained a completely mechanical system with no use of electric energy, with the consequent energy savings;
- it can be provided with a filter that is automatically cleaned with the passage of water.

### BRIEF DESCRIPTION OF THE DRAWINGS

For a better understanding of what has been disclosed, some drawings are attached in which, diagrammatically and only as a non-limitative example, a practical embodiment is shown.

Fig. 1 is a diagrammatical section view of the reusing system of the present invention;

Figs. 2-13 are diagrammatical section views of the reusing system of the present invention in the different steps of the method for reusing water of the present invention;

Figs. 14 and 15 are section views of the deviation and filtration element of the water intake to the tank from the sink, in its two possible positions; and

Figs. 16-18 are diagrammatical section views of the disinfection system, in its three possible positions.

### DESCRIPTION OF A PREFERRED EMBODIMENT

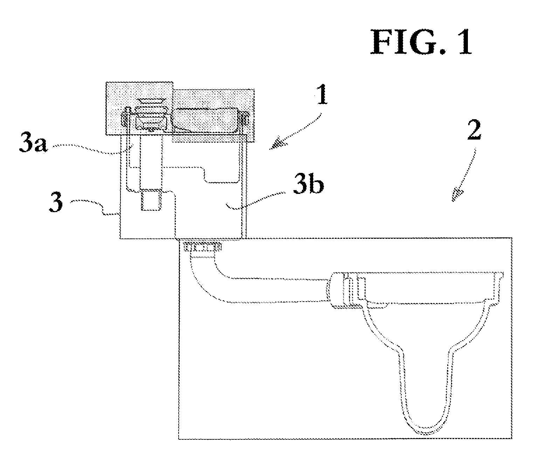

As shown in Fig. 1, the system for reusing water of the present invention comprises a sink, generally indicated by numeral reference 1 and a toilet, generally indicated by numeral reference 2.

Said sink 1 comprises a tank 3 communicated with said toilet 2, a deviation and filtration element 4 and a disinfection system 5. The toilet 2 also comprises a discharge push-button (not shown), as conventionally. Said push-button can be placed in the toilet 2 or in the sink 1, e.g. in a side of it.

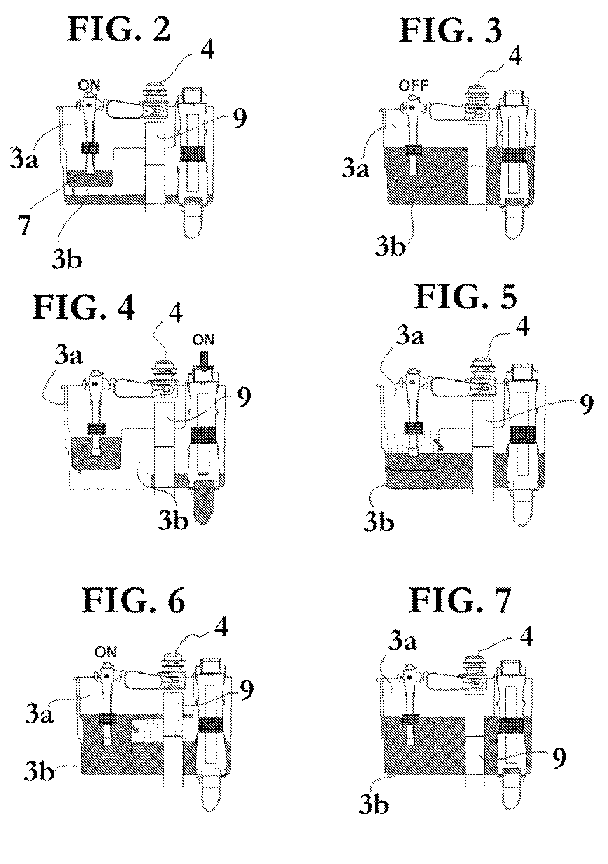

As is show with greater detail in Figs. 2-12, the tank 3 is divided into an upper tank 3a and a lower tank 3b communicated to each other by a hole 7 provided at the lower part of said upper tank 3a.

In Fig. 2 a first step of the method of the present invention is shown. In this first step the filling of the upper tank 3a with water from a first intake of water (not shown) from the mains is carried out.

When the water is accumulated in the upper tank 3a, the water also passes to the lower tank 3b through said hole 7, until it reaches a second preset level (Fig. 3), in which moment said first intake of water is closed. In a preferred embodiment, said second level is 6 liters of whole discharge and 3 liters of partial discharge, even though it could be any suitable volume enough to obtain the desired end, i.e. to discharge the enough water volume to the toilet tank 2.

When the user uses the toilet 2, he/she pushes its discharge push-button, completely or partially discharging the water contained inside the lower tank 3b. As known, this complete or partial discharge can be obtain with a double push-button.

When the water exits from the lower tank 3b, the water from the upper tank 3a passes to the lower tank 3b (Fig. 4).

When a stable level of water is reached (Fig. 5), it is necessary to feed water, because the stable level is lower than said second preset level.

Therefore, the upper tank 3a is filled with water from said first water intake, until said second preset level is reached (Fig. 6).

If the reusing system of the present invention is used in the non-reusing mode, the process will be repeated again when the user pushes the discharge push-button of the toilet 2.

If the user uses the sink 1 when the deviation and filtration element 4 is driven (whose operation will be described later), the water from the sink 1 enters in said upper tank 3a through a second water intake.

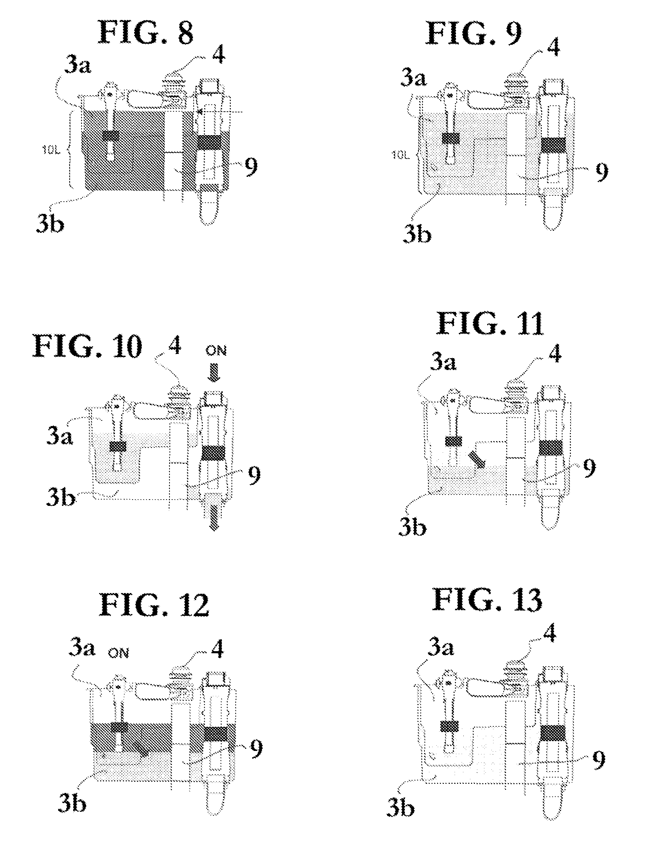

The upper tank 3a can be filled until the assembly of the upper tank 3a and the lower tank 3b reaches a first preset level, e.g. 10 usable liters (Fig. 8). If the user continues using the sink 1 in the water-reusing mode, the remaining water will be removed automatically from the tank 3 thanks to a drain 9.

Then, the water from the sink 1 is mixed with the water already present inside the upper 3a and lower 3a tanks (Fig. 9).

When the user uses the toilet 2 and pushes the discharge push-button, the mixed water will be used for washing the toilet bowl 2, with the consequent saving of water (Fig. 10). When the level of water inside the lower tank 3b lowers, the water from the upper tank 3a passes to the lower tank 3b (Fig. 10), the level of mixed water being stabilized at a specific level (Fig. 11), which can be lower than said second preset level.

As it is necessary said second preset level of water to be always present, the upper tank 3a and the lower tank 3b will be filled with water from the mains through the hole 7, until said second preset level is reached (Fig. 12), mixing this water with the mixed water already present inside the upper 3a and lower 3b tanks (Fig. 13).

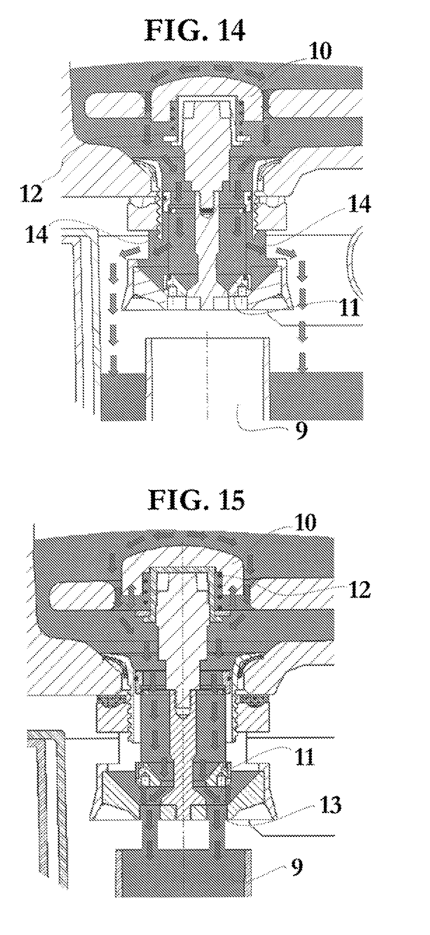

In Figs. 14 and 15 the deviation and filtration element 4 is shown. In Fig. 14 the water from the sink 1 passes to the upper tank 3a, and in Fig. 15 the water goes directly to the drain 9. When the water enters inside the upper tank 3a, it is previously filtered to prevent particles in the water inside the upper tank 3a.

To change from one position to the other one, this element 4 comprises at its upper part a cap 10 linked with a plug 11 and a spring 12. Therefore, at its lower position, shown in Fig. 14, the plug 11 closes the central exit 13 and permits the exit of water through the side exits 14 through the filter, and at its upper position, shown in Fig. 15, by gravity the water exits directly through said central exit 13 to the drain 9. In this position, the filter is automatically washed by the water flow.

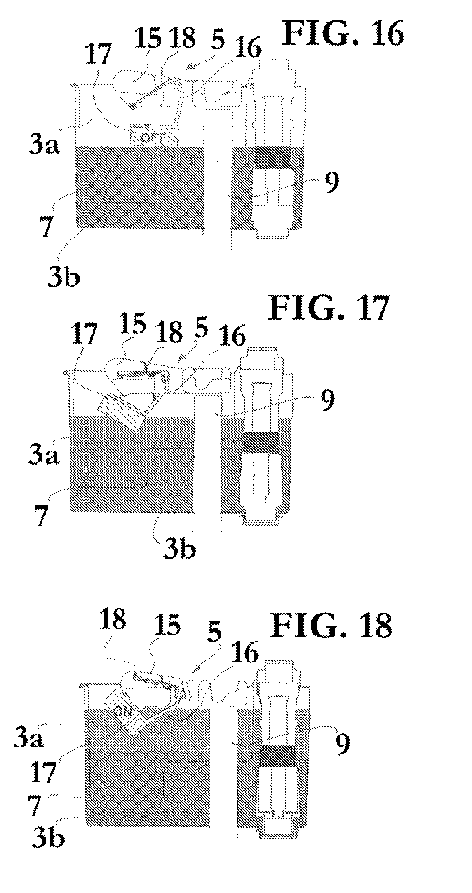

In Figs. 16-18 the disinfection system of the present in said upper tank 3a is shown.

The disinfection system, according to a preferred embodiment, comprises a disinfectant housed inside a container 15, said container comprising a feeding plate 18 provided at an end of a swinging arm 16. At the other end of said swinging arm 16 a buoy 17 is placed, so that the position of the buoy 17 determines the position of said feeding plate 18, providing the disinfectant to the water when the water lever inside the tank is preferably higher than said second preset level. It must be pointed out that the disinfectant could also be fed to the water when the water level inside the tank is lower than said second preset level.

Therefore, when the water level inside the upper tank 3a is lower or the same as a preset level, said disinfectant will not be fed to the water (Fig. 16).

When the water fills the upper tank 3a and the water level is higher, the buoy 17 will make the arm 16 to swing and the disinfectant will be fed (Figs. 17 and 18).

It must be pointed out that in the system of the present invention the sink 1 and the toilet 2 can be integral to each other of they can be hinged by any suitable means.

Even though reference is made to a specific embodiment of the invention, it is apparent for a person skilled in the art that the described reusing system and method are susceptible of numerous variations and modifications, and that all the details cited can be substituted by other technically equivalent ones, without departing from the scope of protection defined by the attached claims.

## Claims

1. System for reusing water from a sink (1) in a toilet (2), comprising a tank (3) provided with:
- two water intakes: a first intake of water from the mains and a second intake of water from the faucet of said sink (1); and
- a water exit to the bowl of said toilet (2); **characterized in that** said tank (3) comprises an upper tank (3a) and a lower tank (3b) connected to each other by a hole (7), said first and second intakes providing water to said upper tank (3a), so that water passes from said upper tank (3a) to said lower tank (3b) when the water present inside said lower tank (3b) is between a residual level and a first predetermined level.

2. System according to claim 1, wherein said upper tank (3a) comprises a drain (9), through which the water exists to a waste pipe when the water present inside said upper tank (3a) is higher than said first preset level.

3. System according to claims 1 or 2, wherein said second water intake comprises a deviation element (4), which in a first position deviates the water to said upper tank (3a) and in a second position deviates the water to said drain (9).

4. System according to claim 3, wherein said deviation element (4) comprises a particle filter.

5. System according to anyone of the previous claims, which also comprises disinfecting means (15) of the water inside the upper tank (3a).

6. System according to claim 5, wherein said disinfection means comprises a disinfectant housed inside a container (15), said container comprising a feeding plate (18) provided at an end of a swinging arm (16), the other end of said swinging arm (16) being provided with a buoy (17), so that the position of the buoy (17) determines the position of said feeding plate (18), the disinfectant being fed to the water when said water level inside the tank is higher than a preset level.

7. Method for reusing water from a sink (1) in a toilet (2) with the system according to anyone of claims 1-6, **characterized in that** it comprises the steps of:
a) filling said upper tank (3a) with water from a first intake, the water passing from the upper tank (3a) to the lower tank (3b) until the water reaches a second preset level;
b) discharging the water from said lower tank (3b) when a discharge push-button of the toilet (2) is pushed;
c) repeating step a) if the level is lower than said second preset level;
d) filling said upper tank (3a) with water from a second intake until the water reaches a first preset level or a lower level;
e) mixing the water from the second intake with the water present inside the upper (3a) and lower (3b) tanks;
f) repeating step b); and
g) repeating step c).

8. Method according to claim 7, wherein said second level is 6 liters of volume of water.

9. Method according to claim 7, wherein said step d) comprises a filtering step of said water from said second intake.

10. Method according to claim 7, wherein said step d) comprises a disinfection step when the level of water is higher than a preset level.
